# EUROPÄISCHE PATENTSCHRIFT

(11) **EP 1 632 013 B1**
(45) Veröffentlichungstag und Bekanntmachung des Hinweises auf die Patenterteilung: **15.06.2011**
(21) Anmeldenummer: 04725622.7
(22) Anmeldetag: 03.04.2004
(51) Int. Cl.: H02K 5/136

(54) **ANTRIEB, INSBESONDERE STELL- UND REGELANTRIEB, FÜR KLAPPEN UND ARMATUREN**
DRIVE, IN PARTICULAR ACTUATING AND VARIABLE-SPEED DRIVE FOR FLAPS AND FITTINGS
ENTRAINEMENT, NOTAMMENT ENTRAINEMENT DE COMMANDE ET DE REGULATION, POUR DES CLAPETS ET DES GARNITURES

(30) Priorität: 15.04.2003 DE 10317181
(43) Veröffentlichungstag der Anmeldung: 08.03.2006
(73) Patentinhaber: Schischek Produktion technischer Geräte GmbH, 90579 Langenzenn (DE)
(72) Erfinder: Schischek, Alexander, 90766 fürth (DE)
(74) Vertreter: Hofmann, Gerhard
(86) Internationale Anmeldenummer: PCT/EP2004/003571
(87) Internationale Veröffentlichungsnummer: WO 2004/093295

(56) Entgegenhaltungen:
- EP-A- 1 156 249
- GB-A- 1 035 712
- US-A- 3 134 056
- US-A- 4 205 246
- US-A- 5 073 736
- US-B1- 6 392 322

## Beschreibung

Die Erfindung betrifft einen Antrieb, insbesondere einen Stell- und Regelantrieb, für Klappen und Armaturen, die sich in einer explosionsgefährdeten Umgebung befinden können, mit einer Steuerelektronik und mit Funktionskomponenten, wie Getriebe und Handhabungseinrichtungen.

Antriebe für Klappen und Armaturen und dergleichen sind in großer Zahl bekannt. Als Beispiel sei die EP 1215060 A2 genannt. In dieser Druckschrift ist ein Stellantrieb für Klappen von Klimaanlagen beschrieben, bei welcher der Stellantrieb mit der Klappe fest verbunden und mit dieser schwenkbar ist. Die Leitungen sind zwecks eines ungehinderten Schwenkbetriebes durch die Stellwelle nach außen geführt. Bei dieser bekannten Anordnung ist in der Stellwelle außerdem ein Stecker für die Leitungen angeordnet, um die Montage zu erleichtern.

Die Erfindung befasst sich demgegenüber mit dem Explosionsschutz von Stell- und Regelantrieben und erfordert außerdem ein wesentlich breiteres Anwendungsgebiet als im vorbeschriebenen Fall.

Explosionsschutz bedeutet, dass der Antrieb, seine Steuerung, seine Hilfskomponenten, wie Getriebe und Handhabungseinrichtungen, sowie Schalter und dergleichen, in einer explosionsgefährdeten Umgebung arbeiten. Eine solche Umgebung ist durch das Vorhandensein eines explosionsfähigen Mediums wie Gase, Nebel, Dämpfe und Stäube aber auch Flüssigkeiten gekennzeichnet. Beim Explosionsschutz kommt es darauf an, dass die vorgenannten Baugruppen keine Zündquellen darstellen. Eine Explosion könnte entstehen durch elektrisch oder mechanisch erzeugte Funken, durch statische Elektrizität, durch offene Flammen, heiße Oberflächen, Blitz oder chemische Zündquellen. Beispielsweise würde eine etwaige Innenexplosion unweigerlich zur Zündung des explosionsfähigen Mediums in der Umgebung führen und dort eine Explosion erzeugen, die starke Schäden oder Zerstörungen verursacht. Die Festigkeit der vorgenannten Baugruppen gegen eine Außenexplosion, das heißt die Explosion des Mediums an sich, ohne Innenexplosion, spielt hingegen im vorliegenden Zusammenhang keine Rolle.

Bisher war es bei explosionsgeschützten Geräten üblich, dass alle Baugruppen, die für das Gerät erforderlich sind, nämlich Antrieb, Steuerelektronik, Hilfskomponenten und dergleichen, einschließlich Getriebe, Federrücklauf und Handhabungseinrichtungen, insgesamt in einem druckfesten Gehäuse gekapselt sind. Diese auf dem Markt befindlichen Geräte sind aufgrund dieser Gegebenheiten groß und damit teuer.

Aus der US 5 073 736 welche als nächstliegender Stand der Technik betrachtet wird ist ein Pumpenmotor bekannt, der in einer explosionsgefährdeten Umgebung arbeitet und entsprechend geschützt ist. Dementsprechend ist das Gehäuse aus 2 Kammern gebildet, wobei die explosionsauslösenden Baugruppen, nämlich zumindest Motor und Steuerelektronik, in einem ersten, explosionsgeschützten Gehäuseteil angeordnet sind, wohingegen die nicht zu schützenden Baugruppen, in dem zweiten, nicht explosionsgeschützten Gehäuseteil, das an dem ersten angeflanscht ist, untergebracht sind. An dem geschützten Gehäuseteil ist eine ebenfalls geschützte Bedieneinheit angebracht, welche die Ansteuerung des Motors ermöglicht.

Aus der US 3 134 056 ist ferner ein ähnliches, explosionsgeschütztes Gerät bekannt, das zur Steuerung einer Pumpe dient. Der geschützte Teil enthält ein magnetisches Betätigungselement und elektrische Zuleitungen für den Magneten, wohingegen der zweite, nicht geschützte Teil die Pumpe enthält.

Aus der GB 1 035 712 ist ferner ein Motor für eine Bergbaumaschine bekannt, der in einer explosionsgefährdeten Umgebung betrieben wird und eine geschützte Kammer, die Motor und Steuergetriebe, sowie eine ungeschützte Kammer aufweist, die die elektrischen Anschlüsse enthält.

Die Erfindung hat sich als Aufgabe gestellt, einen Antrieb, insbesondere Stell- oder Regelantrieb, vorzuschlagen, der kleiner und billiger als die bekannten Geräte ist, dadurch ein breiteres Anwendungsgebiet hat und der durch die Besonderheit seines Aufbaus eine einfache Herausführung der Betätigungswellen aus dem Gehäuse zuläßt und durch bloßes Umdrehen des Gehäuses eine Änderung der Antriebsdrehrichtung dieser Betätigungswellen erlaubt.

Die Lösung dieser Aufgabe ist im Anspruch 1 gekennzeichnet. Bei der Erfindung geht es somit darum, nur noch jene Baugruppen des Antriebes, seiner Steuerung und seiner Hilfskomponenten in ein explosionsgeschütztes Gehäuse einzubauen, die Zündquellen darstellen können, wohin gegen alle übrigen Baugruppen, bei denen diese Gefahr nicht besteht, in einem normalen, das heißt, nicht explosionsgeschützten Gehäuse, das auch teilweise offen sein kann, angeordnet werden. Bei dieser Lösung muss von vornherein genau geprüft werden, welche Baugruppen einen Explosionsschutz erfordern und welche nicht, um dann eine entsprechende Auswahl für die beiden Gehäuse zu treffen

Die Erfindung ist nun dahingehend ausgebildet, dass sich die beiden Gehäuse in einem nichtexplosionsgeschützten Aussengehäuse befinden, das Öffnungen für die Antriebswelle, die Bedieneinheit, die Handverstellung, die Kabelanschlüsse und die Befestigungsmittel für das Aussengehäuse selbst aufweist. Mit diesem Aussengehäuse, das vorzugsweise aus einem statisch nicht aufladbaren Kunststoff oder aus Metall, wie z.B. Edelstahl oder Aluminium besteht, ist nicht nur ein ansprechendes Gehäuse realisierbar, es sind in diesem auch die Befestigungsmöglichkeiten des Antriebs auf Vor- und Rückseite gegeben, um einen Links- oder einen Rechtslauf des Antriebs zu ermöglichen. Zweckmäßigerweise ist dieses Aussengehäuse aus zwei Halbschalen gebildet, aus deren gegenüberliegenden Seitenflächen die Antriebswelle herausgeführt ist, ebenso wie die Welle für die Handverstellung des Motors im Notfall. Eine der Halbschalen trägt Öffnungen, durch welche die Bedieneinheit am ersten Gehäuse betätigbar ist.

Unter Klappen und Armaturen sollen im Zusammenhang mit der Erfindung Luftklappen, Brandschutzklappen, Ventile, Drosselklappen, Mischer und Kugelhähne verstanden werden. Als Hilfskomponenten, welche über eigensichere Stromkreise zu schützen sind, um keine Zündquellen darzustellen, sind Thermostate, Hygrostate, Taster, Schalter und Filterüberwachungsgeräte zu nennen.

Als Anwendungsgebiete der Erfindung sind Gebäudeausrüstung, Industrieanlagen, insbesondere für die Chemie und Pharmazie, Kläranlagen, Gasförderung, Lackier- und Trocknungsanlagen sowie On- und Offshore - Technologien besonders bevorzugt.

Die Erfindung kann nun vorteilhaft dahingehend ausgebildet sein, daß sich in dem zweiten, nicht explosionsgeschützten Gehäuse neben dem Getriebe ein Federrücklauf befindet. Mit diesem lassen sich vor allem Sicherheitsfunktionen verwirklichen, in dem nämlich bei Ausfall der Stromversorgung Luftklappen oder Armaturen mechanisch in ihre Ausgangslage zurückgeführt werden.

Für die Ausbildung des Motors im ersten Gehäuse sind zwei Varianten vorteilhaft, von denen die bevorzugte derart ausgebildet ist, dass der Motor einen hohlen Bund aufweist, in dem die Motorwelle mit ihrem einen Lager gelagert ist, wobei der Bund mit dem einen Gehäuseteil des ersten Gehäuses explosionssicher zusammengefügt ist und der Explosionsschutz der Motorwelle durch die Wellen - Naben - Geometrie gewährleistet ist. Letzteres bedeutet, dass die Spaltbreite und die Spaltlänge zwischen der Welle und der sie umgebenden Nabe in einem Verhältnis zu dem Durchmesser der Welle stehen, das mit einer Bandbreite durch Norm - Bestimmungen zur Explosionssicherheit festgelegt ist.

Im folgenden soll die Erfindung anhand der Zeichnung noch näher erläutert werden.

Es zeigen:
Figur 1: eine Seitenansicht, in einem Schnitt entlang der Linie I - I der Figur 2
Figur 2: eine Ansicht des Aussengehäuses in Richtung A in Figur 1
Figur 3: eine Ansicht des ersten explosionsgeschützten Gehäuses von oben bei abgenommenem Deckel
Figur 4: eine perspektivische Ansicht des ersten, explosionsgeschützten Gehäuses in geschlossenem Zustand
Figur 5: eine erste Variante des Motors in einem Teilschnitt
Figur 6: eine zweite Variante des Motors in einem Schnitt.

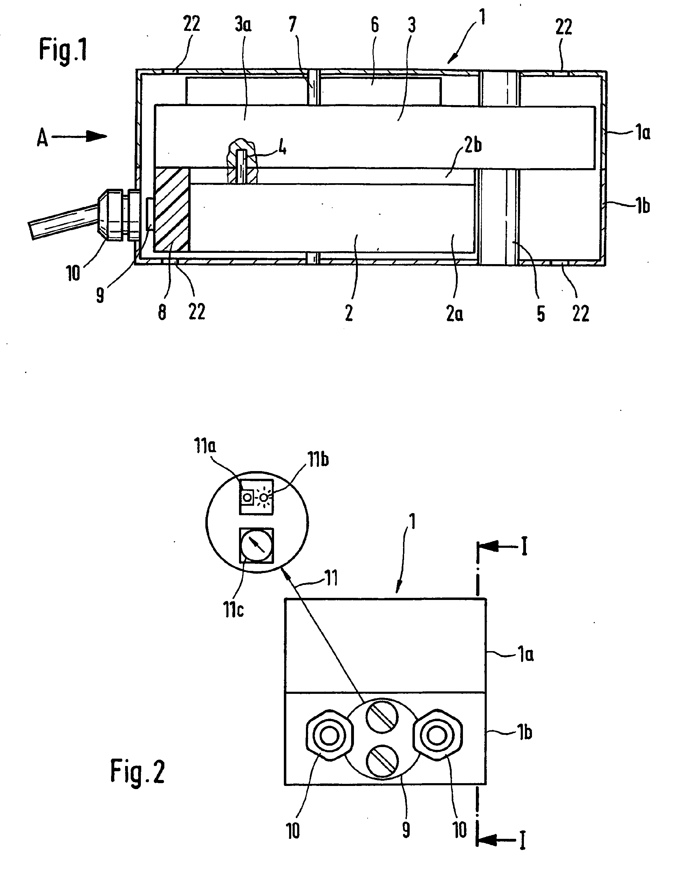

In Figur 1 ist ein Aussengehäuse aus Kunststoff in einer Seitenansicht, geschnitten, dargestellt, welches aus Halbschalen 1a und 1b besteht. In dem Aussengehäuse sieht man, ungeschnitten, ein explosionsgeschütztes Gehäuse 2, welches Gehäuseteile 2a und 2b aufweist. Dieses explosionsgeschützte Gehäuse 2 ist angeflanscht an ein Gehäuse 3, welches nicht explosionsgeschützt ausgeführt ist. In diesem Gehäuse 3 befindet sich ein Getriebe 3a, welches mit einer schematisch angedeuteten Welle 4 mit dem Motor in dem Gehäuse 2 in Verbindung steht. Der Abtrieb aus dem Gehäuse 3, nämlich die Antriebswelle, ist mit 5 bezeichnet. Diese Welle ist beidseits bis an die Gehäuseoberfläche des Aussengehäuses 1 geführt. An dem Gehäuse 3 ist, ebenfalls nur schematisch dargestellt, ein Federrücklauf 6 angeflanscht, welcher bei Stromausfall die Antriebswelle 5 in ihre Ausgangsstellung zurückdreht. Mit 7 ist die Welle der Handverstellung bezeichnet, welche aus dem Getriebe heraus ebenfalls bis an beide Seitenflächen des Aussengehäuses 1 herausgeführt ist und eine Möglichkeit der Handverstellung des Getriebes bietet. An das Gehäuse 2 anschließend ist eine Vergussmasse 8 angedeutet, in welche die Bedieneinheit 9 mit ihren stromführenden Teilen eingebettet ist. Mit 10 ist schließlich die Verschraubung für den Kabelanschluss bezeichnet.

Die Figur 2 stellt eine Ansicht in Richtung des Pfeiles A dar und zeigt die Verschraubungen 10 für Kabelanschlüsse sowie die Bedieneinheit 9, welche als Einzelheit bei Pfeil 11 dargestellt ist. Man erkennt einen Taster 11a, eine Lampe 11b und einen 10-Stellenschalter 11c. Mit dem Taster 11a kann man durch mehrmaliges Drücken verschiedene Funktionen aufrufen, welche durch die Lampe durch unterschiedliche Farben, Helligkeit oder Blinkfrequenz angezeigt werden können. Die eingestellte Funktion ist mit dem 10-Stellenschalter 11c in Stufen fein einstellbar. Durch die Kapselung dieser eigensicheren Bauteile in der Vergussmasse 8 ist die Explosionssicherheit entsprechend der Norm gewährleistet.

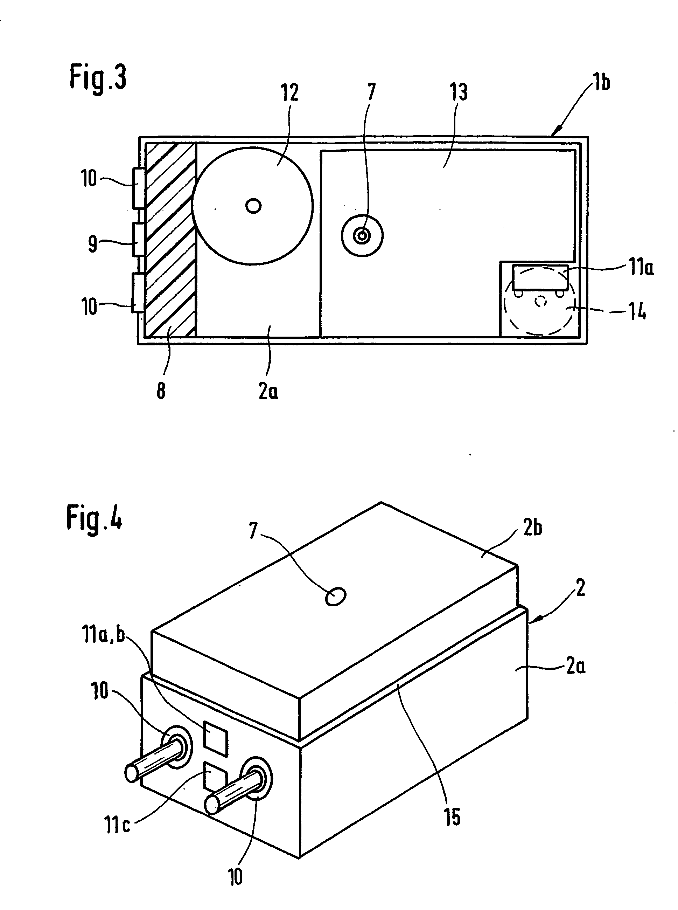

In Figur 3 ist eine Draufsicht auf das Gehäuseteil 1b bei abgenommenem Deckel 2b dargestellt. Man sieht in dem Gehäuse, schematisch dargestellt, einen Motor 12, eine Leiterplatte 13, ebenfalls schematisch dargestellt, an deren Unterseite die elektronischen Bauteile und die Leiterbahnen angeordnet sind. Mit 14 ist ein Hilfsschalter für die Endstellungssignalisierung bezeichnet. Im übrigen sind gleiche Bauteile mit gleichen Bezugszeichen wie in Figur 1 bezeichnet.

In Figur 4 ist das explosionsgeschützte Gehäuse 2 mit seinen Gehäuseteilen 2a und 2b in zusammengebautem Zustand dargestellt, wobei die Anlageflächen mit einer Vergussmasse 15 vergossen sind.

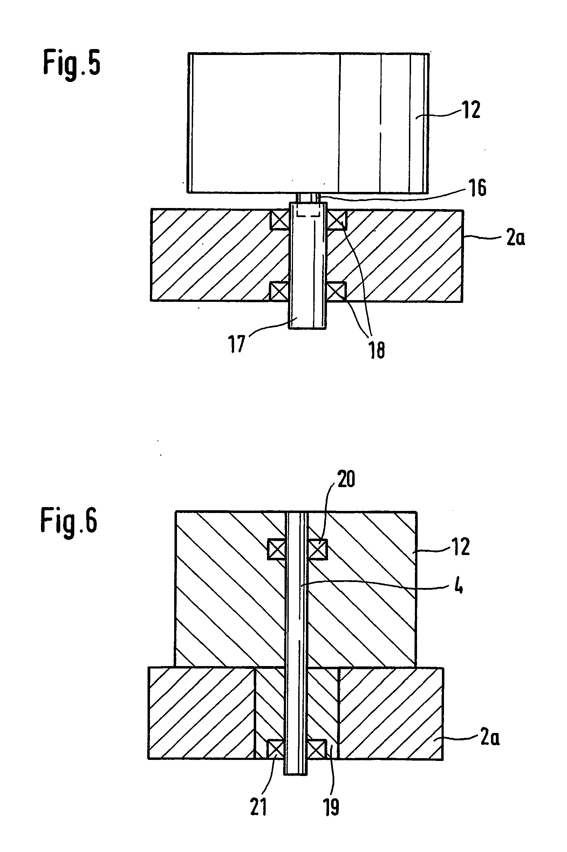

In den Figuren 5 und 6 sind zwei mögliche Varianten der explosionsgeschützten Anordnung des Motors in dem Gehäuseteil 2a dargestellt. In Figur 5 ist der Motor 12 über eine Kupplung 16 mit einer Welle 17 verbunden. Diese Kupplung besteht aus einem sechskantig ausgebildeten Ende der Motorwelle, welche in eine entsprechende sechskantige Öffnung der Welle 17 eingreift. Die Welle 17 ist in zwei Lagern 18, die in das Gehäuseteil 2a eingepresst sind, gelagert.

Die in Figur 6 dargestellte zweite Variante zeigt den Motor 12, der auf dem Gehäuseteil 2 angeordnet ist und einen Bund 19 aufweist, der in das Gehäuseteil 2a eingepresst ist und in welchem die Motorwelle 4 in zwei Lagern 20 und 21 gelagert ist. Das Lager 21 ist in den Bund 19 eingepresst oder eingeschraubt Das Lager 20 ist das übliche, im Motor bereits vorhandene Lager für die Welle 4. Diese zweite Variante ist bevorzugt wegen ihres einfacheren und daher billigeren Aufbaus gegenüber der Variante nach Figur 5.

Die vorbeschriebene Anordnung des erfindungsgemäßen Antriebes stellt eine in der Explosionsschutztechnik bisher nicht gekannte Verkleinerung und Vereinfachung des Aufbaus dar. Durch die Box 1 ist ein vielseitig befestigbares und ansprechend gestaltbares Gehäuse gegeben, welches die vielseitige Anwendbarkeit des Antriebes ermöglicht.

## Patentansprüche

1. Antrieb, insbesondere Stell- und Regelantrieb, für Klappen und Armaturen, die sich in einer explosionsgefährdeten Umgebung befinden können, mit einer Steuerelektronik und mit Funktionskomponenten, wie Getriebe und Handhabungseinrichtungen wobei die explosionsauslösenden Baugruppen, nämlich zumindest Motor (12) und Steuerelektronik (13), in einem ersten, explosionsgeschützten Gehäuse (2) angeordnet sind, welches an ein zweites, nicht explosionsgeschütztes Gehäuse (3) angeflanscht ist, das die nicht zu schützenden Funktionskomponenten enthält und wobei eine im Sinne des Explosionsschutzes eigensicher ausgeführte Bedieneinheit (9) zur Parametrierung des Motors (12) an dem ersten, explosionsgeschützten Gehäuse (2) angeordnet ist, so daß eine Bedienung unter Spannung während des Betriebes möglich ist und wobei die beiden Gehäuse sich in einem nicht explosionsgeschützten Außengehäuse befinden,
**dadurch gekennzeichnet,**
**dass** das Aussengehäuse (1) aus 2 Halbschalen (1a, 1b) besteht, dass die Antriebswelle (5) aus 2 gegenüberliegenden Seitenflächen des Aussengehäuses (1) herausgeführt ist, desgleichen die Welle (7) für die Handverstellung und dass die Öffnungen (22) für die Befestigungsmittel auf den gleichen Seitenflächen angebracht sind.

2. Antrieb nach Anspruch 1
**dadurch gekennzeichnet,**
**dass** das erste Gehäuse (2) aus Gehäuseteilen (2a, 2b) besteht, in deren einem Motor (12), Steuerelektronik (13) und Bedieneinheit (9) angeordnet sind und dass die beiden Gehäuseteile (2a, 2b) miteinander verbunden und durch Vergussmasse (15) an der gemeinsamen Anlagefläche explosionsschutztechnisch gesichert sind.

3. Antrieb nach Anspruch 1 oder 2,
**dadurch gekennzeichnet,**
**dass** sich die Klappen und Armaturen in von einem explosiven Medium durchströmten Leitungen befinden.

4. Antrieb nach Anspruch 1,
**dadurch gekennzeichnet,**
**dass** die Bedieneinheit (9) auch zur Parametrierung der Steuerelektronik (13) dient.

5. Antrieb nach Anspruch 1,
**dadurch gekennzeichnet,**
**dass** in dem zweiten Gehäuse (3) neben dem Getriebe (3a) ein Federrücklauf (6) vorgesehen ist.

6. Antrieb nach Anspruch 1,
**dadurch gekennzeichnet,**
**dass** die Bedieneinheit (9) multifunktional ausgebildet ist.

7. Antrieb nach Anspruch 7,
**dadurch gekennzeichnet,**
**dass** die Bedieneinheit (9) aus einem Taster (11a), einer Lampe (11b) und einem Mehrstellenschalter (11c) besteht, wobei durch den Taster (11a) durch mehrfache Betätigung verschiedene Funktionen aufrufbar und durch die Lampe (11b) anzeigbar sind und wobei durch den Mehrstellenschalter (11c) eine Feineinstellung möglich ist.

8. Antrieb nach Anspruch 1,
**dadurch gekennzeichnet,**
**dass** das Aussengehäuse (1) aus 2 Kunststoffhalbschalen (1a,1b) besteht.

9. Antrieb nach Anspruch 1,
**dadurch gekennzeichnet,**
**dass** das Aussengehäuse (1) aus 2 Metallschalen besteht.

10. Antrieb nach Anspruch 1
**dadurch gekennzeichnet,**
**dass** der Motor (12) über eine Kupplung (16) an eine im ersten Gehäuse (2) gelagerte Welle (17) gekoppelt ist, die mit dem Getriebe (3a) in Verbindung steht, und dass der Explosionsschutz durch die Wellen - Naben - Geometrie gewährleistet ist, derart, dass Spaltbreite und Spaltlänge zwischen Welle und Nabe in einem Verhältnis zum Durchmesser der Welle entsprechend der Norm zur Explosionssicherheit festgelegt sind.

11. Antrieb nach Anspruch 1
**dadurch gekennzeichnet,**
**dass** der Motor (12) einen hohlen Bund (19) aufweist, in dem die Motorwelle (4) mit ihrem einen Lager (21) gelagert ist, wobei der Bund (19) mit dem Gehäuseteil (2a) des ersten Gehäuses (2) explosiosionssicher zusammengefügt ist, und dass der Explosionsschutz der Motorwelle durch die Wellen - Nabengeometrie gewährleistet ist, derart, dass Spaltbreite und Spaltlänge zwischen Welle und Nabe in einem Verhältnis zum Durchmesser der Welle entsprechend der Norm zur Explosionssicherheit festgelegt sind.

## Claims

1. Drive, particularly an actuating and variable-speed drive for flaps and fittings which can be located in an explosive environment, comprising control electronics and comprising functional elements such as a transmission and manipulators, the explosion-triggering assemblies, namely at least the motor (12) and control electronics (13) being arranged in a first explosion-proof casing (2) which is flanged to a second, non-explosion-proof casing (3) which contains the functional elements not to be protected, and an operating unit (9), constructed to be intrinsically safe in the sense of explosion protection, for parameterizing the motor (12) being arranged at the first explosion-proof casing (2), so that operation under voltage is possible during the operation and the two casings being located in a non-explosion-proof external casing, **characterized in that** the external casing (1) consists of two half shelves (1a, 1b), **in that** the drive shaft (5) exits from two opposite side faces of the external casing (1), as does the shaft (7) for the manual adjustment, and **in that** the openings (22) for the mounting means are arranged on the same side faces.

2. Drive according to Claim 1, **characterized in that** the first casing (2) consists of casing parts (2a, 2b), in which a motor (12), control electronics (13) and operating unit (9) are arranged, and **in that** the two casing parts (2a, 2b) are joined to one another and are secured at the common supporting face in an explosion-proof manner by casting compound (15).

3. Drive according to Claim 1 or 2, **characterized in that** the flaps and fittings are located in lines through which an explosive medium flows.

4. Drive according to Claim 1, **characterized in that** the operating unit (9) is also used for parameterizing the control electronics (13).

5. Drive according to Claim 1, **characterized in that** a spring return (6) is provided in the second casing (3) next to the transmission (3a).

6. Drive according to Claim 1, **characterized in that** the operating unit (9) is constructed to be multifunctional.

7. Drive according to Claim 7, **characterized in that** the operating unit (9) consists of a pushbutton (11a) a lamp (11b) and a multi-position switch (11c), wherein various functions can be called off by the pushbutton (11a) by multiple actuation and can be indicted by the lamp (11b) and wherein a fine adjustment is possible by means of the multi-position switch (11c).

8. Drive according to Claim 1, **characterized in that** the external casing (1) consists of 2 plastic half shells (1a, 1b).

9. Drive according to Claim 1, **characterized in that** the external casing (1) consists of 2 metal shells.

10. Drive according to Claim 1, **characterized in that** the motor (12) is coupled via a coupling (16) to a shaft (17) supported in the first casing (2), which shaft is connected to the transmission (3a), and **in that** the explosion protection is guaranteed by the shaft-hub geometry in such a manner that gap width and gap length between shaft and hub are specified in a ratio to the diameter of the shaft in accordance with the standard for explosion protection.

11. Drive according to Claim 1, **characterized in that** the motor (12) has a hollow collar (19) in which the motor shaft (4) is supported with its one bearing (21), the collar (19) being joined to the casing part (2a) of the first casing (2) in an explosion-proof manner, and **in that** the explosion protection of the motor shaft is guaranteed by the shaft-hub geometry, in such a manner that gap width and gap length between shaft and hub are specified in a ratio to the diameter of the shaft according to the standard for explosion protection.

## Revendications

1. Mécanisme d'entraînement, notamment servomoteur et régulateur de vitesse, pour des clapets et des éléments de robinetterie qui peuvent se trouver dans un environnement explosible, comprenant une électronique de commande et des composants fonctionnels tels que des engrenages et des dispositifs de manipulation, les sous-ensembles déclenchant une explosion, à savoir au moins le moteur (12) et l'électronique de commande (13) étant disposés dans un premier boîtier (2) antidéflagrant qui est fixé par des brides à un deuxième boîtier (3) non antidéflagrant, lequel contient les composants fonctionnels qui ne sont pas à protéger et une unité de commande (9) destinée au paramétrage du moteur (12), en exécution à sécurité intrinsèque dans le sens de la protection antidéflagrante, étant montée sur le premier boîtier (2) antidéflagrant de sorte qu'une utilisation sous tension soit possible pendant le fonctionnement et les deux boîtiers se trouvant dans un boîtier externe non antidéflagrant,
**caractérisé en ce que** le boîtier externe (1) se compose de deux demi-coques (1a, 1b), **en ce que** l'arbre d'entraînement (5) sort par 2 faces latérales opposées du boîtier externe (1), tout comme l'arbre (7) pour le réglage manuel, et **en ce que** les ouvertures (22) pour les moyens de fixation sont placées sur les mêmes faces latérales.

2. Mécanisme d'entraînement selon la revendication 1, **caractérisé en ce que** le premier boîtier (2) se compose de parties de boîtier (2a, 2b) dans lesquelles sont disposés un moteur (12), l'électronique de commande (13) et l'unité de commande (9) et **en ce que** les deux parties de boîtier (2a, 2b) sont reliées entre elles et sont sécurisées par une technique antidéflagrante par une masse de scellement (15) sur la face d'appui commune.

3. Mécanisme d'entraînement selon la revendication 1 ou 2, **caractérisé en ce que** les clapets et les éléments de robinetterie se trouvent dans des conduites parcourues par un fluide explosif.

4. Mécanisme d'entraînement selon la revendication 1, **caractérisé en ce que** l'unité de commande (9) sert également au paramétrage de l'électronique de commande (13).

5. Mécanisme d'entraînement selon la revendication 1, **caractérisé en ce qu'**un rappel à ressort (6) est prévu dans le deuxième boîtier (3), à côté de l'engrenage (3a).

6. Mécanisme d'entraînement selon la revendication 1, **caractérisé en ce que** l'unité de commande (9) est multifonctionnelle.

7. Mécanisme d'entraînement selon la revendication 7, **caractérisé en ce que** l'unité de commande (9) se compose d'une touche (11a), d'un témoin lumineux (11b) et d'un commutateur à plusieurs positions (11c), différentes fonctions pouvant être invoquées par la touche (11a) en l'actionnant plusieurs fois et pouvant être indiquées par le témoin lumineux (11b) et un réglage fin étant possible par le commutateur à plusieurs positions (11c).

8. Mécanisme d'entraînement selon la revendication 1, **caractérisé en ce que** le boîtier extérieur (1) se compose de 2 demi-coques en matière plastique (1a, 1b).

9. Mécanisme d'entraînement selon la revendication 1, **caractérisé en ce que** le boîtier extérieur (1) se compose de 2 coques métalliques.

10. Mécanisme d'entraînement selon la revendication 1, **caractérisé en ce que** le moteur (12) est accouplé par le biais d'un accouplement (16) à un arbre (17) logé dans le premier boîtier (2), lequel est en liaison avec l'engrenage (3a), et **en ce que** la protection antidéflagrante est garantie par la forme géométrique arbres - moyeux, de sorte que la largeur de l'interstice et la longueur de l'interstice entre l'arbre et le moyeu soient définis en rapport avec le diamètre de l'arbre conformément à la norme relative à la sécurité antidéflagrante.

11. Mécanisme d'entraînement selon la revendication 1, **caractérisé en ce que** le moteur (12) présente une collerette (19) creuse dans laquelle est logé l'arbre du moteur (4) avec l'un de ses paliers (21), la collerette (19) étant assemblée de manière antidéflagrante avec la partie de boîtier (2a) du premier boîtier (2), et **en ce que** la protection antidéflagrante de l'arbre du moteur est garantie par la forme géométrique arbres - moyeux, de sorte que la largeur de l'interstice et la longueur de l'interstice entre l'arbre et le moyeu soient définis en rapport avec le diamètre de l'arbre conformément à la norme relative à la sécurité antidéflagrante.
